(19) Europäisches Patentamt
European Patent Office
Office européen des brevets

(11) **EP 3 261 209 B1**

(12) **EUROPEAN PATENT SPECIFICATION**

(45) Date of publication and mention
of the grant of the patent:
**09.01.2019  Bulletin 2019/02**

(51) Int Cl.:
***H02J 3/18*** *(2006.01)*        ***H02J 3/00*** *(2006.01)*

(21) Application number: **16176158.0**

(22) Date of filing: **24.06.2016**

(54) **METHOD, CONTROL APPARATUS, SYSTEM AND COMPUTER PROGRAM PRODUCT FOR REACTIVE POWER AND VOLTAGE CONTROL IN DISTRIBUTION GRIDS**

VERFAHREN, STEUERUNGSVORRICHTUNG, SYSTEM UND COMPUTERPROGRAMMPRODUKT FÜR BLINDLEISTUNGS- UND -SPANNUNGSSTEUERUNG IN VERTEILUNGSGITTERN

PROCÉDÉ, APPAREIL DE COMMANDE, SYSTÈME ET PRODUIT DE PROGRAMME INFORMATIQUE POUR UNE COMMANDE DE TENSION ET DE PUISSANCE RÉACTIVE DANS DES GRILLES DE DISTRIBUTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.12.2017  Bulletin 2017/52**

(73) Proprietor: **Siemens Aktiengesellschaft 80333 München (DE)**

(72) Inventors:
• **Mesanovic, Amer**
  **80809 München (DE)**
• **Münz, Ulrich**
  **81673 München (DE)**
• **Szabo, Andrei**
  **85521 Ottobrunn (DE)**

(56) References cited:
• **HOSSAIN M J ET AL: "Robust Control for Power Sharing in Microgrids With Low-Inertia Wind and PV Generators", IEEE TRANSACTIONS ON SUSTAINABLE ENERGY, IEEE, USA, vol. 6, no. 3, 1 July 2015 (2015-07-01), pages 1067-1077, XP011584880, ISSN: 1949-3029, DOI: 10.1109/TSTE.2014.2317801 [retrieved on 2015-06-17]**
• **IL-YOP CHUNG ET AL: "Control Methods of Inverter-Interfaced Distributed Generators in a Microgrid System", IEEE TRANSACTIONS ON INDUSTRY APPLICATIONS, IEEE SERVICE CENTER, PISCATAWAY, NJ, US, vol. IA-19, no. 3, 1 May 2010 (2010-05-01) , pages 1078-1088, XP011305542, ISSN: 0093-9994**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a method as stated in claim 1, to a control apparatus as described in claim 11, a system as described in claim 13 and a computer program product described in claim 14.

Today large electrical energy sources such as large wind parks, fossil power plants and hydro power plants are connected to an electrical transmission grid controlled by a network control center. This control center usually is operated by a transmission system operator (TSO) company. The electrical energy is transported in the transmission grid to a distribution grid at lower voltage level. Connected to the distribution grid - operated by a distribution system operator (DSO) company - are for example small wind parks, photovoltaic plants, buildings, houses, factories and private prosumers.

The persistent increase of distributed and renewable generation and the subsequent disconnection of large conventional power plants have two major effects:

First, active power generation, especially from renewable sources, is more volatile and more variable power flows are a direct consequence. Second, there is a lack of important power system services, e.g. voltage support by reactive power, that have so far been provided by large power plants.

The provisioning of reactive power by the distribution grid for voltage support to the transmission grids has been identified as one solution in the publicly funded research project "SysDL 2.0: Systemdienstleistungen aus Flachenverteilnetzen, BMWi-gefördertes Forschungsprojekt", www.sysdl20.de. DSOs can apply two different approaches to control reactive power in their grid.

For instantaneous reactive power control, the power flow control uses so called Q references to optimize the actual power flow in the grid. The influence of existing Q(V) curves is neglected. For this approach, load or generation changes by the generators such as wind parks require fast communication and re-optimization. This leads to a limited robustness to loss of communication connections between the control center and the generators.

In another approach, robust reactive power control, the DSOs apply power flow control using Q(V) curves. Robust optimization of uncertain power flow and direct optimization of Q(V) curves are performed. This has the advantage that load or generation changes can be compensated by Q(V) curves. This requires less communication in the grid - it even works without communication for a short time - and makes the overall approach more robust against disturbances. The invention follows the later approach.

It is state-of-the-art to control voltage in transmission grids by injecting reactive power. Today, this voltage control is executed by the excitation controllers of the synchronous generators of large power plants, e.g. nuclear, coal or gas power plants. If more reactive power is required, special components provide additional reactive power. These components are called Flexible Alternating Current Transmission Systems (FACTS). As more and more conventional generators are disconnected from the grid, more FACTS would be required for voltage support. However, FACTS are quite expensive and do not provide active power. Hence, alternative reactive power sources would be beneficial. State-of-the-art power converters for renewable generators, especially wind and photovoltaic (PV), are able to provide reactive power to the power system upon request of the grid operators. Particular functionalities like Q(V) droop curves (reactive power/voltage characteristic) are required in today's grid codes, e.g. in the technical guideline "BDEW: Generating Plants Connected to the Medium-Voltage Network", page 27-28, from 2008.

In the state of the art, local control of reactive power injected into a grid is often performed via a so called droop controllers, which apply a droop function Q(V), i.e. a linear dependency of the reactive power on the local voltage. In principle, locally measured voltage magnitudes are taken into account: If the local voltage is lower than the nominal voltage or a given voltage set-point, the generator generates reactive power proportionally to its droop coefficient. When the local voltage is higher than the nominal voltage of the grid, the generator consumes reactive power proportionally to a given coefficient.

Alternative Q(V) droop controller functions include nonlinear dependencies between reactive power injection Q and voltage measurement V, linear or nonlinear dependencies between reactive current injection ($i_Q$) and voltage measurements V, inverse functions where the voltage V is controlled depending on linear or nonlinear functions of the measured reactive power Q or reactive current ($i_Q$). With some abuse of notation, we also include Q(V) droop controllers where the reactive power Q or reactive current ($i_Q$) injection depends on the active power injection P.

Hence, distributed, renewable generators are able to provide reactive power to the distribution grid. However, the optimal aggregation and control of the multitude of reactive power generators in the distribution grid to provide meaningful reactive power to the transmission grid is still an open issue. So far, distribution grids are not required to provide predetermined reactive power to the transmission grid. Hence, practical solutions to the above problem do not exist so far. Academic researchers suggest to control reactive power provisioning by distributed generators, e.g. wind or PV, as well as reactive power compensators, e.g. FACTS, in distribution grids directly from the distribution grid management system. The management system uses active and reactive power as well as voltage measurements from the distribution grid to compute the optimal reactive power provisioning of each generator and compensator online based on power flow optimization algorithms. The optimized reactive power set-points are then communicated to the individual generators.

Clearly, this online power flow control system requires a significant amount of communication, especially for volatile power generation. If the communication system fails, reactive power provisioning is not possible anymore and in the worst case counterproductive reactive power is supplied by the individual generators because updated set-points are not received.

It is known from EP3002846 A1 to optimize voltage and reactive power set-points of distributed generators in order to maintain voltages in the distribution grid within prespecified limits for uncertain active power infeed and loads. However, this approach also requires frequent communication between the distribution grid management system and the individual components.

It is known from the publication "Combined Central and Local Control of Reactive Power in Electrical Grids with Distributed Generation", Chistaykov et al., Proc. IEEE Intern. Energy Conference and Exhibition (ENERGYCON), 2012, to apply a centralized optimization of distributed, decentral local Q(V)-droop controller parameters and set-points in order to achieve voltage limit satisfaction for known active power feed-in predictions. Yet, reactive power provisioning to the transmission grid is not considered.

Suitable algorithms for robust optimization problems are known from "Convex Optimization", S. Boyd and L. Vanden-berghe, Cambridge University Press, New York, USA, 2004.

A method according to the general part of claim 1 is known from ""Robust Control for Power Sharing in Microgrids With Low-Inertia Wind and PV Generators" by HOSSAIN M J et al., IEEE TRANSACTIONS ON SUSTAINABLE ENERGY, IEEE, USA, vol. 6, no. 3, 1 July 2015 (2015-07-01), pages 1067-1077, XP011584880, ISSN: 1949-3029, 001: 10.1109/TSTE.2014.2317801.

Additionally the publication "Control Methods of Inverter-Interfaced Distributed Generators in a Microgrid System" by IL-YOP CHUNG et al., IEEE TRANSACTIONS ON INOUSTRY APPLICATIONS, IEEE SERVICE CENTER, PISCATAWAY, NJ, US, vol. IA-19, no. 3, 1 May 2010 (2010-05-01), pages 1078-1088, XP011305542, ISSN: 0093-9994 is known. It

It is an object of the present invention to provide a method, a control device, a system and a computer program product for reactive power and voltage control in a distribution grid that are more reliable in particular in cases where regular communication between generators, voltage sensors and central control is disturbed.

The invention solves the abovementioned problem by the method of claim 1. Preferred and advantageous embodiments of the method are described in claims 2 to 10.

The invention also solves the abovementioned problem by the control apparatus of claim 11. A preferred and advantageous embodiment is described in claim 12.

The invention also solves the abovementioned problem by the system of claim 13 and the computer program product of claim 14. A preferred and advantageous embodiment is described in claim 15.

A distribution grid is an electrical network with decentralized generation, loads and/or reactive power compensators.

The voltage of the connection buses to the transmission grid and the active power generation/demand of the generators and loads are unknown, but it is assumed that they lie inside a known convex set. The goal is to provide reactive power to the transmission grid for voltage support with a minimal deviation from the desired value. For this purpose, the power flow equations have been linearized around an operation point, and decentralized proportional Q(V) controllers have been chosen for the reactive power control of the generators and reactive power compensators. To optimize these parameters, a nonlinear optimization problem is defined.

The main challenge solved by the invention is the reformulation that leads to a robust optimization problem which can be solved efficiently. The algorithm can be implemented on a computer-processor, e.g. on a centralized distribution grid control unit that communicates sporadically, e.g. every 5 minutes or upon an event, with individual stations / droop controllers in the distribution grid. The control unit and/or the computer program product may be central instances for the power grid or distributed over several communicating instances. In an advantageous variance of the invention the method is implemented as a cloud application, thereby allowing for efficient scalability of computational power in case of large distribution grids to be optimized.

In principle, a robust optimization process is run by one or more processors for a set of equations to computes optimized parameters of the Q(V) droop controllers. Robust optimization methods as described by Boyd et al. are a particular class of optimization methods allowing for uncertain parameters. They specifically allow the optimization of first quantities satisfying given constraints for a whole domain of uncertain second quantities. The constraints are often denoted as robust optimization constraints and the domain of uncertain second quantities is often denoted as uncertainty or robust optimization uncertainty.

One aspect that differentiates the invention from previous publications is the robust optimization of distributed droop controllers in order to provide reactive power to the transmission grid with an explicit inclusion of uncertain active power generation and voltages intervals as well as the effect of these uncertainties on the local droop controllers in the power flow optimization problem. Hence, both the modelling and the formulation of the optimization problem are new.

In comparison to the teaching of EP3002846 A1, droop controllers are included in the optimization problem. Also uncertain load and generation conditions are considered in order to optimize the droop controller parameters.

In comparison to the paper of Chistaykov et al., reactive power is provided to the transmission grid instead of merely achieving voltage limit satisfaction. Moreover, the claimed method includes uncertain load and generation explicitly, making it faster to compute than the method of Chistaykov.

The main advantage compared to previously published approaches from academia is the direct and efficient optimization of the local Q(V) droop controllers subject to uncertain generation. Hence, a regular communication is not required during operation. On the contrary, new set points are only required if the active powers and voltages are leaving their respective uncertainty limits. The method even allows for computing a back-up parameter set-up for situations with loss of communication, e.g. for several minutes.

Particular embodiments of the invention are described in the following paragraphs in conjunction with the drawings.

The drawings show in schematic representation:

Figure 1    a method according to an embodiment of the invention, and

Figure 2    a control apparatus according to an embodiment of the invention, and

Figure 3    a System according to a first embodiment of the invention, and

Figure 4    a System according to a second embodiment of the invention, and

Figure 5    an example of two different norms applied in second embodiment of the invention.

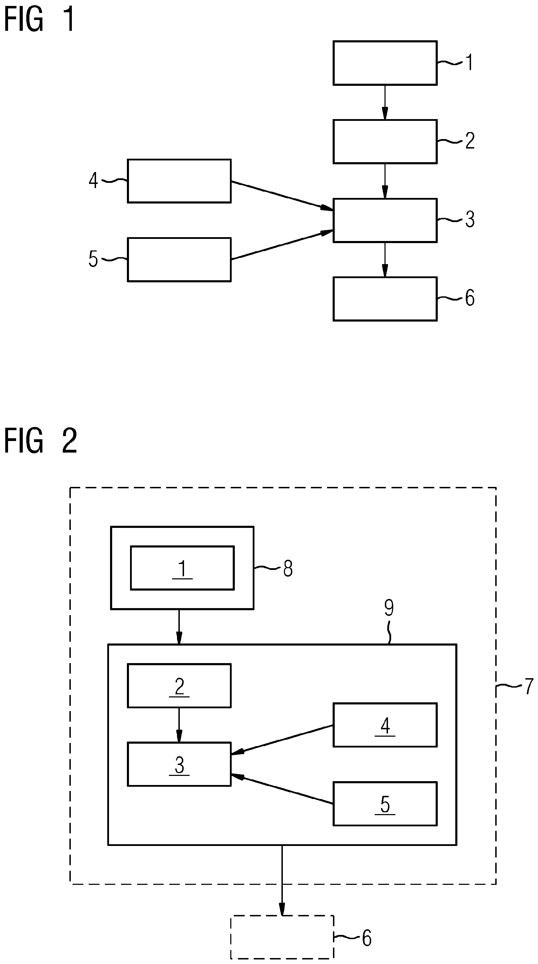

Figure 1 shows a method according to an embodiment of the invention. In step 1 a steady state model of the distribution grid is derived, wherein the steady state model takes into account both a power flow behavior of the distribution grid and a steady state behavior of local Q(V) droop controllers. The steady state model is in part linearized in step 2. In step 3 a robust optimization problem is formulated that computes optimized parameters of the Q(V) droop controllers, the optimized parameters comprising voltage set-points and reactive power set-points as well as droop gain. The optimization problem is solved so that cost function terms are minimized, the terms comprising:
a deviation of reactive power supply to transmission grid from a reference value and power losses in the distribution grid. The robust optimization problem is formulated subject to constraints, the constraints comprising Voltage limits in the distribution grid and at least one of the following constraints:

- Power line capacities,
- Hard limits for the deviation of reactive power supply to the transmission grid from its reference value,
- Apparent power limits of the individual generators,
- Reactive power limits of reactive power compensators in the distribution grid.

The robust optimization problem is formulated taking into account uncertainties, the uncertainties containing first uncertainties denoted with box 4: unknown but bounded active power infeed and load and second uncertainties denoted with box 5: unknown but bounded voltages at the connection points of the distribution grid to transmission grids. Then the optimization problem is solved.
The optimized parameters are applied in step 6 to control renewable energy generators and Q(V) droop controllers in the distribution grid.
Figure 2 shows a control apparatus 7 according to an embodiment of the invention. The control apparatus 7 for reactive power and voltage control in a distribution grid contains a steady state derivation device 8 configured to derive a steady state model of the distribution grid, and an optimization device 9 configured to solve the robust optimization problem as elaborated in figure 1. As a result optimized values for the Q(V) droop controllers, namely voltage set-points and reactive power set-points as well as droop gain values are applied in to control renewable energy generators and Q(V) droop controllers in the distribution grid.

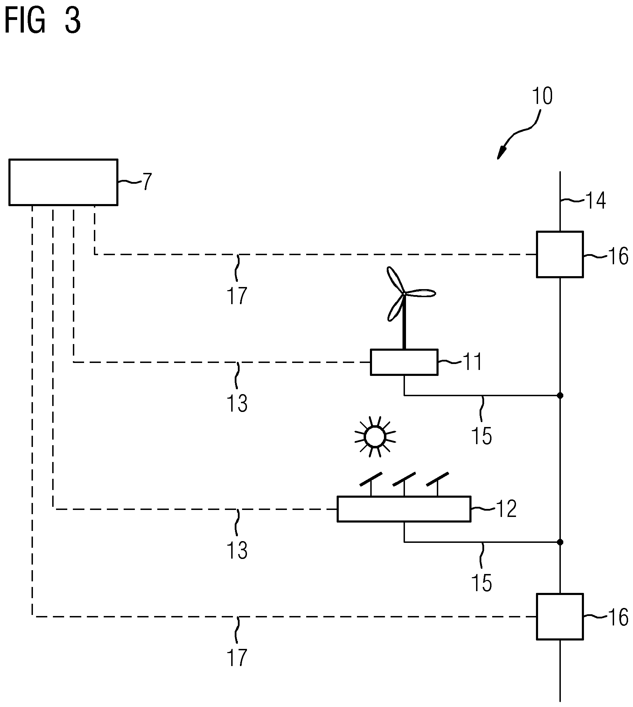

In figure 3, the control apparatus 7 of figure 2 is connected to voltage sensors 16 via communication connections 17. The voltage sensors 16 are located in a distribution grid 15. Additional voltage sensors are contained within the generators 11,12 (not shown). Connected to the distribution grid via electrical lines 15 are a wind turbine 11 and a photovoltaic power source 15 as renewable energy resources. Both the turbine 11 and the solar energy source 15 are connected to the control apparatus via data communication and control connections 13. A droop controller is located at the wind turbine 11 and controls its reactive power infeed. Through efficient computation of optimized parameters comprising voltage setpoints and reactive power set-points as well as droop gain, reactive power can be supplied to a transmission grid (not shown) connected to the distribution grid 14 at a predetermined reference value. The pretermined reference value can for example be set be an grid operator of the transmission grid

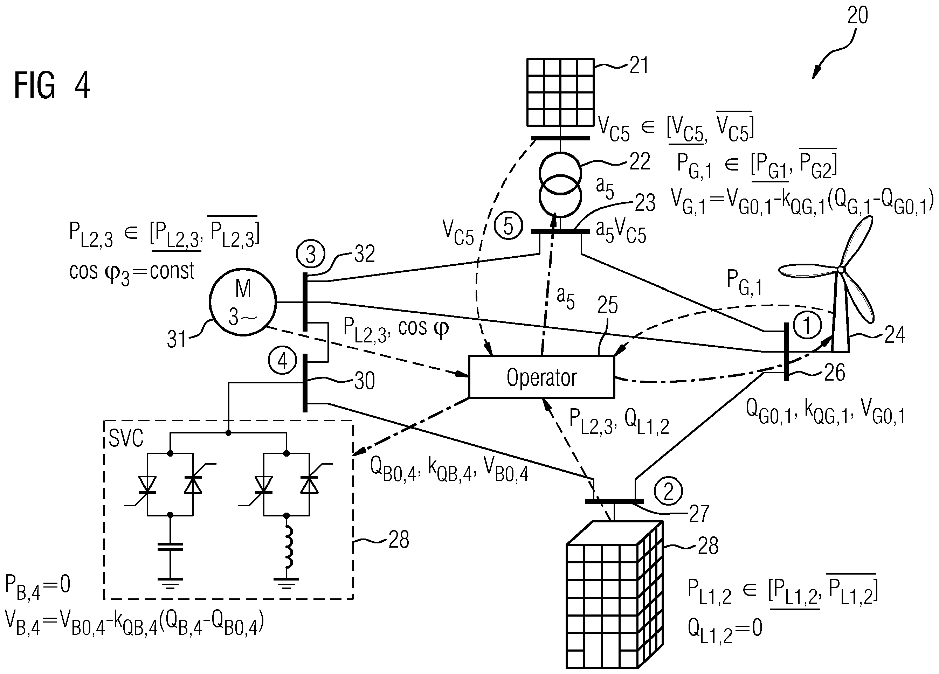

Figure 4 shows an active distribution grid with droop controlled reactive power. Five bus bars, denoted with numbers in circles, are installed. Bus 26 is connected to wind turbine 24. Bus 27 is connected to a building 28, while bus 30 is connected to a Static VAR compensator (SVC) 28. Bus 32 is connected to three-phase motor 31, while transmission grid 21 is connected to bus 23 via transformer 22. The Operator 25 includes a computer system adapted to perform the method described in the following paragraphs.

The following bus types in the distribution grid are defined (denoted by numbers enclosed in circles):

1. Generators, whose active power generation $P_G$ lies inside a known set $P_G \in (\underline{P_G}, \overline{P}_G)$ and their reactive power $Q_{G,i}$ is given by Q(V) droop controllers

$$Q_{G,i} = Q(V) = Q_{G0,i} - 1/k_{QG,i} (V_{G,i} - V_{G0,i}) \ .$$

For convenience of the subsequent equations, this equation is reformulated as

$$V_{G,i} = V_{G0,i} - k_{QG,i}(Q_{G,i} - Q_{G0,i}), \qquad (1)$$

where $Q_{G,i}$ is the reactive power generation, $Q_{G0,i}$ is the reactive power setpoint for the generator, $V_G$ is the controlled generator voltage, $V_{G0}$ is the generator voltage setpoint, and $k_{QG,i}$ is the reactive power droop gain. The total number of generators in the grid is $N_G$. Such generators are, for example, wind parks, photovoltaic generators or conventional generators (represented in Figure 4 with a wind park on bus 1)

2. Loads $L_1$ with a constant reactive power $Q_{L1,i}$, whose active power lies inside a known set $P_{L1,i} \in (\underline{P}_{L1,i}, \overline{P}_{L1,i})$. The total number of $L_1$ loads in the grid is $N_{L1}$. Such loads are, for example, households (which have a $Q_{L1} \approx 0$). Loads with an unknown active power (but with a known interval in which this power lies) and a known reactive power can be modeled with this load type. These loads are represented in Figure 4 with a building on bus 2.

3. Loads $L_2$ with a constant power factor $\cos\varphi_1$, where $\varphi_1$ is the angle between the apparent power of the load and the active power of the load, whose active power lies inside a known set $P_{L2,i} \in (\underline{P}_{L2,i}, \overline{P}_{L2,i})$, and the reactive power $Q_{L2,i}$ is calculated using

$$Q_{L2,i} = \tan(\varphi_i)P_{L2,i}, \qquad (2)$$

The total number of $L_2$ loads in the grid is $N_{L2}$. Most loads in the grid have an approximately constant power factor: motors, households have a power factor of 1, tools etc. These loads are represented in Figure 4 with a motor on bus 3.

4. Reactive power compensator, without an active power injection ($P_{B,i} = 0$) and Q(V) droop controllers

$$Q_{B,i} = Q(V) = Q_{B0,i} - 1/k_{QB,i} (V_{B,i} - V_{B0,i})$$

For convenience of the subsequent equations, this equation is reformulated as

$$V_{B,i} = V_{B0,i} - k_{QB,i}(Q_{B,i} - Q_{B0,i}), \qquad (3)$$

where $Q_{B,l}$, $QB_{0,l}$, $V_{B,l}$ $V_{B0,l}$ and $k_{QB,i}$ are defined analogously as for the generator buses. The total number of compensators in the grid is $N_B$. Such compensators are, for example flexible AC transmission system devices (static compensator, static VAr compensator - SVC etc). Compensators are represented in Figure 1 with a SVC on bus 4.

5. Connection buses to the transmission grid, whose voltage $V_{C,i}$ lies inside a known set $V_{C,i} \in (\underline{V}_{C,i}, \overline{V}_{C,i})$. The changes in active power generation/load in the distribution grid are compensated through the connection buses. It is assumed that the connection buses are on the secondary side of power transformers with on-load tap changers. Thus, the effective voltage on the connection points is $a_i V_{C,i}$, where $a_i$ is the variable transformer tap ratio. If the tap ratio cannot be optimized (because the distribution grid operator does not own the transformer), the tap ratio can be assigned a fixed value in the problem solution. The total number of connection buses in the grid is $N_C$. A connection bus is bus 5 in Figure 4.

For simplicity, it is assumed that there are no on-load tap changers inside the distribution grid, however they can be built in analogously if necessary. Since generators and compensators use analogous formulas for their reactive power generation, they can be combined into one element denoted with $Q_{D,i}$ (D is an abbreviation for "droop"). Equations (1) and (3) can be stacked and written in vector notation as

$$\mathbf{V}_D = \mathbf{V}_{D0} - \operatorname{diag}(\mathbf{k}_{QD})(\mathbf{Q}_D - \mathbf{Q}_{D0}), \qquad (4)$$

where

$$\mathbf{V}_D = \begin{pmatrix} V_{G,1} \\ \vdots \\ V_{G,N_G} \\ V_{B,1} \\ \vdots \\ V_{B,N_B} \end{pmatrix} \quad \mathbf{V}_{D0} = \begin{pmatrix} V_{G0,1} \\ \vdots \\ V_{G0,N_G} \\ V_{B0,1} \\ \vdots \\ V_{B0,N_B} \end{pmatrix} \quad \mathbf{k}_{QD} = \begin{pmatrix} k_{QG,1} \\ \vdots \\ k_{QG,N_G} \\ k_{QB,1} \\ \vdots \\ k_{QB,N_B} \end{pmatrix}$$

$$\mathbf{Q}_D = \begin{pmatrix} Q_{G,1} \\ \vdots \\ Q_{G,N_G} \\ Q_{B,1} \\ \vdots \\ Q_{B,N_B} \end{pmatrix} \quad \mathbf{Q}_{D0} = \begin{pmatrix} Q_{G0,1} \\ \vdots \\ Q_{G0,N_G} \\ Q_{B0,1} \\ \vdots \\ Q_{B0,N_B} \end{pmatrix}.$$

Now the problem can be formulated as follows: Given a distribution grid with the previously defined generator/load types. Moreover, given power line limits and generator limits, a desired reactive power supply $Q^*_C$ at the connection buses, and a maximal voltage deviation $\Delta V$ for all buses, i.e. $V_i \in [V_n\text{-}\Delta V_1, V_n\text{+}\Delta V_2,], \forall i$. If the grid power flow is known for $t = t_0$, and the load and generation uncertainty limits $[\underline{P}_G, \overline{P}_G]$, $[\underline{P}_{L1,i}, \overline{P}_{L1,i}], [\underline{P}_{L2,i}, \overline{P}_{L2,i}]$, as well as the voltage uncertainty limits of the connection buses $[\underline{V}_{C,i}, \overline{V}_{C,i}]$ are known, how should the reactive power setpoints $Q_{D0}$, the voltage setpoints $V_{D0}$ and the droop gains $k_{QD}$ of the generators and compensators, and the tap ratios a of the transformers in the connection buses be tuned such that all constraints are satisfied and the reactive power taken from the transmission grid is as close as possible to the desired value $Q^*_C$ for $t > t0$?

For simplicity, it is assumed in the subsequent analysis that the voltage limits are symmetrical. Analogous analysis can also be made for unsymmetrical limits.

After definition of the problem, a distribution grid model can now be conceived. Power lines in distribution grids are not mainly inductive, in contrast to the transmission grid. In fact, the R/X ratio of distribution lines, that describes the ration between the power line resistance R and reactance X, may be close to or even above 1, so that the assumption $R/X \approx 0$ made for the DC power flow equations are not valid anymore. Thus, the standard nonlinear power flow equations are linearized around the steady-state voltages and angles for $t = t_0$ in the following way

$$\begin{pmatrix} \mathbf{P} - \mathbf{P}_0 \\ \mathbf{Q} - \mathbf{Q}_0 \end{pmatrix} = \begin{pmatrix} \partial\mathbf{P}'/\partial\mathbf{V} & \partial\mathbf{P}'/\partial\theta \\ \partial\mathbf{Q}'/\partial\mathbf{V} & \partial\mathbf{Q}'/\partial\theta \end{pmatrix} \Bigg|_{\mathbf{V}=\mathbf{V}_0, \theta=\theta_0} \begin{pmatrix} \mathbf{V} - \mathbf{V}_0 \\ \theta - \theta_0 \end{pmatrix} \qquad (5)$$

We obtain linear power flow equations in the form

$$\mathbf{P} = A_P \mathbf{V} + B_P \theta + \mathbf{c}_P \qquad (6)$$

$$\mathbf{Q} = A_Q \mathbf{V} + B_Q \theta + \mathbf{c}_Q. \qquad (7)$$

In order to simplify the calculations, we assume that the power system does not have internal buses without loads or generators. The subsequent results can be directly extended to power systems with internal buses with neither loads nor generators using the well-known Kron reduction. The transmission grids connected to the connection buses are considered to be strong enough so that their voltages are not influenced by the actions in the distribution grid, i.e. they can be considered as slack nodes (constant voltage amplitude and angle). The angle of these voltages is known for $t_0$ (and thus for all $t > t_0$). Without the loss of generality, we can assume the buses are sorted so that

$$\mathbf{P} = (\mathbf{P}_C^T \quad \tilde{\mathbf{P}}^T)^T ,$$

where $P_C$ is the active power injection of the connection buses, and $\tilde{P}$ is the active power injection of all other buses. The reactive power vector Q and the vector of bus angles $\theta$ are divided analogously. The voltage vector is not divided, since the voltages of the connection buses are variable. An explicit dependency of the reactive power of generators and compensators from all the uncertainties in the grid and the optimization parameters is sought, i.e. to find $Q_D = f(V_C, P_G, P_{L1}, P_{L2}, k_D, V_{D0}, Q_{D0}, a)$. The constant angles of the connection buses can now be eliminated from equation (6).

$$\tilde{\mathbf{P}} = \tilde{A}_P \mathbf{V} + \begin{pmatrix} B_{PC} & \tilde{B}_P \end{pmatrix} \begin{pmatrix} \theta_C \\ \tilde{\theta} \end{pmatrix} + \tilde{\mathbf{c}}_P'$$

$$\tilde{\mathbf{P}} = \tilde{A}_P \mathbf{V} + \tilde{B}_P \tilde{\theta} + \tilde{\mathbf{c}}_P, \qquad (8)$$

where $\tilde{A}_P$ and $\tilde{c}_P'$ are the matrices $A_P$ and $c_P$, respectively, without the first $N_C$ rows, where $N_C$ is the number of connection buses, and

$$\tilde{\mathbf{c}}_P = B_{PC}\theta_C + \tilde{\mathbf{c}}_P'.$$

Analogously, $\tilde{Q}$ can be expressed from Equation (7)

$$\tilde{\mathbf{Q}} = \tilde{A}_Q \mathbf{V} + \begin{pmatrix} B_{QC} & \tilde{B}_Q \end{pmatrix} \begin{pmatrix} \theta_C \\ \tilde{\theta} \end{pmatrix} + \tilde{\mathbf{c}}_Q'$$

$$\tilde{\mathbf{Q}} = \tilde{A}_Q \mathbf{V} + \tilde{B}_Q \tilde{\theta} + \tilde{\mathbf{c}}_Q, \qquad (9)$$

where $\tilde{A}_Q$ and $\tilde{c}_Q'$ are the matrices $A_Q$ and $c_Q$, respectively, without the first $N_C$ rows, and

$$\tilde{\mathbf{c}}_Q = B_{QC}\theta_C + \tilde{\mathbf{c}}_Q'.$$

The reactive power of the connection buses (which will be used later in the optimization) can be expressed as

$$Q_C = A_{QC} \mathbf{V} + \begin{pmatrix} B_{QCC} & \tilde{B}_{QC} \end{pmatrix} \begin{pmatrix} \theta_C \\ \tilde{\theta} \end{pmatrix} + \mathbf{c}_{QC}'$$

$$= A_{QC} \mathbf{V} + \tilde{B}_{QC} \tilde{\theta} + \mathbf{c}_{QC}, \qquad (10)$$

where $A_{QC}$ and $c'_{QC}$ are the first $N_C$ rows of $A_Q$ and $c_Q$, respectively, and

$$\mathbf{c}_{QC} = \grave{B}_{QCC}\theta_C + \breve{\tilde{\mathbf{c}}}'_{QC}.$$

Equation (8) can now be used to eliminate the voltage angles (matrix $\tilde{B}_P$ is invertible, since the slack buses have been eliminated)

$$\tilde{\theta} = \tilde{B}_P^{-1}\left(\tilde{\mathbf{P}} - \tilde{\mathbf{c}}_P - \tilde{A}_P \mathbf{V}\right). \tag{11}$$

If the last expression is inserted into Equations (9) and (10), we get

$$\tilde{\mathbf{Q}} = D\mathbf{V} + E(\tilde{\mathbf{P}} - \tilde{\mathbf{c}}_P) + \tilde{\mathbf{c}}_Q \tag{12}$$

$$\mathbf{Q}_C = F\mathbf{V} + H(\tilde{\mathbf{P}} - \tilde{\mathbf{c}}_P) + \mathbf{c}_{QC}, \tag{13}$$

where

$$D = \tilde{A}_Q - B_Q \tilde{B}_P^{-1} \tilde{A}_P$$

$$E = \tilde{B}_Q \tilde{B}_P^{-1}$$

$$F = A_{QC} - \tilde{B}_{QC} \tilde{B}_P^{-1} \tilde{A}_P$$

$$H = \tilde{B}_{QC} \tilde{B}_P^{-1}.$$

Without loss of generality, we assume that the buses are sorted such that

$$\tilde{Q} = \left(\tilde{\mathbf{Q}}_D^T \quad \mathbf{Q}_L^T\right)^T,$$

where $\tilde{Q}_D$ corresponds to buses with at least one generator or reactive power compensator and $Q_L$ corresponds to buses with only loads. The dimension of $\tilde{Q}_D$ is $n_D$ and of $Q_L$ is $n_L$, and $n_D + n_L = n$, where n is the number of buses in the grid without the connection buses. The voltage vector can then also be divided as

$$\mathbf{V} = \left(\mathrm{diag}(\mathbf{a})\mathbf{V}_C^T \quad \mathbf{V}_D^T \quad \mathbf{V}_L^T\right),$$

where a is the vector of transformer turn rations on the connection buses, $V_C$ is the voltage vector of the connection buses and $V_D$ and $V_L$ are defined analogously. Matrices D and E are also divided

$$D = \begin{pmatrix} D_{DC} & D_{DD} & D_{DL} \\ D_{LC} & D_{LD} & D_{LL} \end{pmatrix} \quad E = \begin{pmatrix} E_D \\ E_L \end{pmatrix} \quad \tilde{\mathbf{c}}_Q = \begin{pmatrix} \mathbf{c}_{Q,D} \\ \mathbf{c}_{Q,L} \end{pmatrix}.$$

Equation (12) can now be written as two separate equations for the droop and load buses

$$\tilde{Q}_D = D_{DC}\text{diag}(\mathbf{a})\mathbf{V}_C + D_{DD}\mathbf{V}_D + D_{DL}\mathbf{V}_L + E_D(\tilde{\mathbf{P}} - \tilde{\mathbf{c}}_P) + \mathbf{c}_{Q,D} \qquad (14)$$

$$\mathbf{V}_L = D_{LL}^{-1}\left(\mathbf{Q}_L - \mathbf{c}_{Q,L} - D_{LC}\text{diag}(\mathbf{a})\mathbf{V}_C - D_{LD}\mathbf{V}_D - E_L(\tilde{\mathbf{P}} - \tilde{\mathbf{c}}_P)\right). \qquad (15)$$

By inserting (15) into (14) we obtain

$$\tilde{\mathbf{Q}}_D = R_D\mathbf{V}_D + S_D\text{diag}(\mathbf{a})\mathbf{V}_C + T_D\tilde{\mathbf{P}} + U_D\mathbf{Q}_L + \mathbf{c}_D, \qquad (16)$$

where

$$R_D = D_{DD} - D_{DL}D_{LL}^{-1}D_{LD}$$

$$S_D = D_{DC} - D_{DL}D_{LL}^{-1}D_{LC}$$

$$T_D = E_D - D_{DL}D_{LL}^{-1}E_L$$

$$U_D = D_{DL}D_{LL}^{-1}$$

$$\mathbf{c}_D = \mathbf{c}_{Q,D} - E_D\mathbf{c}_P + D_{DL}D_{LL}^{-1}(-\mathbf{c}_{Q,L} + E_L\mathbf{c}_P).$$

Since variable loads can be connected together with generators or compensators to one bus, $\tilde{Q}_D$ and $Q_L$ need to be further divided into

$$\tilde{\mathbf{Q}}_D = \mathbf{Q}_D + \mathbf{Q}_{DL1} + \mathbf{Q}_{DL2} \qquad (17)$$

$$\mathbf{Q}_L = \mathbf{Q}_{L1} + \mathbf{Q}_{L2}, \qquad (18)$$

where $Q_D$ is the vector of generated reactive powers from generators or compensators, $Q_{DL1}$ is the vector of type-1 loads that are together with generators or compensators, $Q_{DL2}$ is the vector of type-2 loads that are together with generators or compensators, and $Q_{L1}$ and $Q_{L2}$ are vectors of type-1 and type-2 loads that correspond to buses without generators or compensators. If there is no type-1 load at bus i, then the corresponding element of $Q_{DL1}$ is equal to zero, i.e. $Q_{DL1,i} = 0$, and analogously for $Q_{DL2}$, $Q_{L1}$, $Q_{L2}$. The vector $\tilde{P}$ can also be divided into

$$\tilde{\mathbf{P}} = \mathbf{P}_D + \mathbf{P}_{L1} + \mathbf{P}_{L2}, \qquad (19)$$

where $P_D$, $P_{L1}$ and $P_{L2}$ are vectors of active power injections of generators, type-1 and type-2 loads, respectively, for every node in the grid, except the connection buses.

For type-2 buses, the reactive power is proportional to the active power (Equation (2)). Since $P_{L2}$ has the dimension n, whereas $Q_{DL2}$ and $Q_{L2}$ the dimensions $n_D$ and $n_L$, respectively, $P_{L2}$ should be divided into two vectors of appropriate dimensions. To prevent introducing new variables into the problem, we will stack $Q_{DL2}$ and $Q_{L2}$ (thus obtaining a vector of reactive powers of type-2 loads of size n), which enables us to write the following equality

$$\begin{pmatrix} \mathbf{Q}_{DL2} \\ \mathbf{Q}_{L2} \end{pmatrix} = \operatorname{diag}(\tan(\varphi))\mathbf{P}_{L2}, \tag{20}$$

where $\varphi$ is the vector of phase angles for type-2 loads with the dimension n. If a bus does not have a connected type-2 load, then the appropriate elements of $\varphi$ and $P_{L2}$ are equal to zero. Equation (16) can now be rewritten as

$$\begin{aligned} \mathbf{Q}_D =& R_D \mathbf{V}_D + S_D \operatorname{diag}(\mathbf{a})\mathbf{V}_C + T_D(\mathbf{P}_D + \mathbf{P}_{L1} + \mathbf{P}_{L2}) + U_D(\mathbf{Q}_{L1} + \mathbf{Q}_{L2}) \\ & + \mathbf{c}_D - \mathbf{Q}_{DL1} - \mathbf{Q}_{DL2} \\ =& R_D \mathbf{V}_D + S_D \operatorname{diag}(\mathbf{a})\mathbf{V}_C + T_D(\mathbf{P}_D + \mathbf{P}_{L1}) + U_D\mathbf{Q}_{L1} + \mathbf{c}_D - \mathbf{Q}_{DL1} \\ & + \begin{pmatrix} -\mathbb{I} & U_D \end{pmatrix} \begin{pmatrix} \mathbf{Q}_{DL2} \\ \mathbf{Q}_{L2} \end{pmatrix} + T_D\mathbf{P}_{L2} \\ =& R_D \mathbf{V}_D + S_D \operatorname{diag}(\mathbf{a})\mathbf{V}_C + T_D(\mathbf{P}_D + \mathbf{P}_{L1}) + U_D\mathbf{Q}_{L1} + \mathbf{c}_D - \mathbf{Q}_{DL1} \\ & + \left[ \begin{pmatrix} -\mathbb{I} & U_D \end{pmatrix} \operatorname{diag}(\tan(\varphi)) + T_D \right] \mathbf{P}_{L2} \\ \mathbf{Q}_D =& R_D \mathbf{V}_D + S_D \operatorname{diag}(\mathbf{a})\mathbf{V}_C + T_D(\mathbf{P}_D + \mathbf{P}_{L1}) + W_D\mathbf{P}_{L2} + \mathbf{c}'_D, \tag{21} \end{aligned}$$

where

$$\mathbf{c}'_D = U_D\mathbf{Q}_{L1} + \mathbf{c}_D - \mathbf{Q}_{DL1}$$

$$W_D = \left[ \begin{pmatrix} -\mathbb{I} & U_D \end{pmatrix} \operatorname{diag}(\tan(\varphi)) + T_D \right].$$

To obtain the same expression for $Q_C$, we divide the matrix F

$$F = \begin{pmatrix} F_{CC} & F_{CD} & F_{CL} \end{pmatrix}.$$

We now insert Equation (15) into Equation (13) and analogously derive the expression for $Q_C$

$$\mathbf{Q}_C = R_C\mathbf{V}_D + S_C\operatorname{diag}(\mathbf{a})\mathbf{V}_C + T_C(\mathbf{P}_D + \mathbf{P}_{L1}) + W_C\mathbf{P}_{L2} + \mathbf{c}'_C, \tag{22}$$

where

$$R_C = F_D - F_{DL}D_{LL}^{-1}D_{LD}$$

$$S_C = F_{DC} - F_{DL}D_{LL}^{-1}D_{LC}$$

$$T_C = H - F_{DL}D_{LL}^{-1}E_L$$

$$U_C = F_{DL}D_{LL}^{-1}$$

$$\mathbf{c}_C = \mathbf{c}_{QC} - H\mathbf{c}_P + F_{CL}D_{LL}^{-1}(-\mathbf{c}_{Q,L} + E_L\mathbf{c}_P)$$

$$\mathbf{c}'_C = U_C \mathbf{Q}_{L1} + \mathbf{c}_C - \mathbf{Q}_{DL1}$$

$$W_C = \left[ (-\mathbb{I} \quad U_C) \, \mathrm{diag}(\tan(\varphi)) + T_C \right].$$

Three parameters are used to describe a line in the droop equation (4), making one parameter redundant. In reality, $V_{D0}$ and $Q_{D0}$ are coupled via the power flow equations for $t = t_0$. Thus, Equation (21) for $t = t_0$ will be used to express $V_{D0}$ as a function of $Q_{D0}$

$$\mathbf{V}_{D0} = R_D^{-1} \left( \mathbf{Q}_{D0} - S_D \mathrm{diag}(\mathbf{a}) \mathbf{V}_{C0} - T_D (\mathbf{P}_{D0} + \mathbf{P}_{L10}) - W_D \mathbf{P}_{L20} - \mathbf{c}'_D \right), \tag{23}$$

where $V_{D0}$, $Q_{D0}$, $V_{C0}$, $P_{D0}$, $P_{L10}$, $P_{L20}$ are the values for $t = t_0$ of the respective vectors. When (23) is inserted into (4) and then combined with (21), we obtain

$$\begin{aligned}
\mathbf{Q}_D =& R_D \left( \mathbf{V}_{D0} - \mathrm{diag}(\mathbf{k}_{QD})(\mathbf{Q}_D - \mathbf{Q}_{D0}) \right) + S_D \mathrm{diag}(\mathbf{a}) \mathbf{V}_C + T_D (\mathbf{P}_D + \mathbf{P}_{L1}) \\
&+ W_D \mathbf{P}_{L2} + \mathbf{c}'_D = R_D R_D^{-1} \Big[ \mathbf{Q}_{D0} - S_D \mathbf{V}_{C0} - T_D (\mathbf{P}_{D0} + \mathbf{P}_{L10}) \\
&- W_D \mathbf{P}_{L20} - \mathbf{c}'_D \Big] - R_D \mathrm{diag}(\mathbf{k}_{QD})(\mathbf{Q}_D - \mathbf{Q}_{D0}) + S_D \mathrm{diag}(\mathbf{a}) \mathbf{V}_C \\
&+ T_D (\mathbf{P}_D + \mathbf{P}_{L1}) + W_D \mathbf{P}_{L2} + \mathbf{c}'_D \\
\mathbf{\Delta Q}_D =& - R_D \mathrm{diag}(\mathbf{k}_{QD}) \mathbf{\Delta Q}_D + S_D \mathrm{diag}(\mathbf{a}) \mathbf{\Delta V}_C + T_D (\mathbf{\Delta P}_D + \mathbf{\Delta P}_{L1}) \\
&+ W_D \mathbf{\Delta P}_{L2} \\
(\mathbb{I} + R_D \mathrm{diag}(\mathbf{k}_{QD})) \mathbf{\Delta Q}_D =& S_D \mathrm{diag}(\mathbf{a}) \mathbf{\Delta V}_C + T_D (\mathbf{\Delta P}_D + \mathbf{\Delta P}_{L1}) + W_D \mathbf{\Delta P}_{L2}, \tag{24}
\end{aligned}$$

where

$$\mathbf{\Delta Q}_D = \mathbf{Q}_D - \mathbf{\Delta Q}_{D0}, \quad \mathbf{\Delta V}_C = \mathrm{diag}(\mathbf{a}) \mathbf{V}_C - \mathrm{diag}(\mathbf{a}) \mathbf{V}_{C0},$$

$$\mathbf{\Delta P}_D = \mathbf{P}_D - \mathbf{P}_{D0}, \quad \mathbf{\Delta P}_{L1} = \mathbf{P}_{L1} - \mathbf{P}_{L10} \text{ and } \mathbf{\Delta P}_{L2} = \mathbf{P}_{L2} - \mathbf{P}_{L20}$$

This equation describes the change of the reactive power injection from the generators and compensators as a function of the uncertainties in the grid and their droop gains.

As a next step, load and generation variations can be modeled. Since only the steady state is considered, all variations are represented as changes in $\Delta P_D$, $\Delta P_{L1}$, $\Delta P_{L2}$ and $\Delta V_C$. These four uncertainties are modeled the same way and for the rest of this section they will be represented through the variable $\Delta P$. The number of buses with uncertain generation or load is denoted with $N_u$. We assume all $\Delta P_i$ are unknown but known to be inside some convex set. We consider two different kinds of convex sets. The first one allows every $\Delta P_i$ to vary freely and independently of the other $\Delta P_i$ in an interval, i.e.

$$|\mathbf{\Delta P}| \leq \overline{\mathbf{\Delta P}}, \tag{25}$$

where

$$\overline{\mathbf{\Delta P}} \in \mathbb{R}_+^{N_u},$$

are known parameters and $\overline{\Delta Pi} = 0$ if variations are not allowed at bus i. For simplicity, symmetric intervals are assumed, however similar results can be derived for asymmetric intervals.

As an alternative, a global uncertainty limit given by the scalar uncertainty is considered:

$$\overline{\mathbf{\Delta P}}^{-T} |\mathbf{\Delta P}| \le 1, \qquad (26)$$

where

$$\overline{\mathbf{\Delta P}}^{-1} = \left[ \overline{\Delta P_i}^{-1} \right],$$

denotes an element-wise inverse of

$$\overline{\mathbf{\Delta P}} \quad \text{and} \quad \overline{\mathbf{\Delta P}}^{-T}$$

is the transpose of

$$\overline{\mathbf{\Delta P}}^{-1}.$$

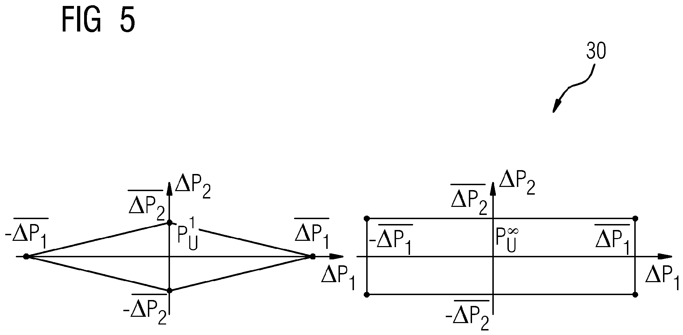

With equation (25), a weighted infinity-norm is defined so that all elements of ΔP can take their extreme values at the same time. With (26), a weighted 1-norm is defined, with which only one element of ΔPcan take its extreme value. The two different sets are illustrated in Fig. 5 for a two-dimensional uncertainty. Note that the number of corner points is $2^{N_u}$ for the infinity-norm and $2N_u$ for the 1-norm, which is not clear from figure 5. The corresponding uncertainty sets are defined accordingly:

$$\mathcal{P}^\infty(\overline{\mathbf{\Delta P}}) = \{ \mathbf{\Delta P} \in \mathbb{R}^{N_u} : |\mathbf{\Delta P}| \le \overline{\mathbf{\Delta P}} \} \qquad (27)$$

$$\mathcal{P}^1(\overline{\mathbf{\Delta P}}) = \{ \mathbf{\Delta P} \in \mathbb{R}^{N_u} : \overline{\mathbf{\Delta P}}^{-T} |\mathbf{\Delta P}| \le 1 \}. \qquad (28)$$

Now power system constraints have to be considered. The following power system constraints are considered in the subsequent optimization problem

1. The voltages are within the admissible limits for $t > t_0$, i.e.

$$\|\mathbf{V} - V_N \mathbf{1}\|_\infty \le \Delta V, \qquad (29)$$

where $V_N$ is the nominal voltage in the distribution grid.

2. The apparent power of the generators is within the allowed limits

$$\mathbf{S}_{G,min}^2 \le \mathbf{P}_G^2 + \mathbf{Q}_G^2 \le \mathbf{S}_{G,max}^2 \qquad (30)$$

3. The reactive power generation of the compensators is within the allowed limits

$$\mathbf{Q}_{B,min} \leq \mathbf{Q}_B \leq \mathbf{Q}_{B,max} \qquad (31)$$

4. The power lines are not overloaded: A maximal current is defined for every power line in the grid. The RMS value of the current flowing through a power line connecting buses i and j is

$$|\underline{I}_{ij}| = \frac{|\underline{V}_i - \underline{V}_j|}{|z_{ij}|} \leq I_{ij,max}. \qquad (32)$$

Thus, the current limit can be converted into an equivalent voltage difference limit

$$|\underline{V}_i - \underline{V}_j| \leq |z_{ij}| I_{ij,max} = \Delta V_{ij,max}. \qquad (33)$$

Using the law of cosines,

$$|\underline{V}_i - \underline{V}_j|$$

can be expressed as

$$|\underline{V}_i - \underline{V}_j| = \sqrt{V_i^2 + V_j^2 - 2V_i V_j \cos(\theta_i - \theta_j)}. \qquad (34)$$

Since the angle differences in distribution grids are usually small, i.e.

$$\cos(\theta_i - \theta_j) \approx 1,$$

Condition (33) can be simplified to

$$|\underline{V}_i - \underline{V}_j| \approx |V_i - V_j|. \qquad (35)$$

In order to write this in matrix notation, we introduce the system incidence matrix B

$$B_{i\alpha} = \begin{cases} 1, & \text{if power line } \alpha \text{ originates from bus } i \\ -1, & \text{if power line } \alpha \text{ terminates at bus } i \\ 0, & \text{otherwise} \end{cases} \qquad (36)$$

which is a sparse matrix with just two entries 1 and -1 in each column with the rows corresponding to the buses connected by the power line $\alpha$. Note that $B^T V$ gives a vector of the size M (number of power lines) with entries $V_i$ - $V_j$ corresponding to each power line voltage difference.

The power line constraints can now be written as

$$B'\mathbf{V} \leq \Delta\mathbf{V}_{PL,max}, \qquad (37)$$

where B is the system incidence matrix as defined in equation (36), and $\Delta V_{PLmax}$ is the known vector of maximal voltage differences on the power lines. This simplified condition will be used in the subsequent optimization problem.

Alternatively, a better linearization could be made if (34) is linearized around steady-state values for $t = t_0$.

5. The reactive power deviation on individual connection buses is not greater than the maximal allowed value

$$|\mathbf{Q}_C - \mathbf{Q}_C^*| \leq \mathbf{\Delta Q}_{C,max} \qquad (38)$$

Next, cost functions can be defined.

The primary goal of the optimization is as defined above: the deviation of the reactive power flow $Q_C{*}_0$ in the connection buses from the desired values

$$\mathbf{Q}_C^*: \; \left\| \mathbf{Q}_{C0} - \dot{\mathbf{Q}}_C^* \right\|_\infty,$$

with which we try to achieve the desired reactive power flow exchange with the transmission grid. However, the minimum of this cost function usually does not uniquely determine the distribution of reactive power generation between the generators and compensators, i.e. $Q_{C0} = Q^*_C$ could be achieved with various different $Q_D$ vectors. Since the linearized power flow equations are the most accurate in the vicinity of the linearization point, which in our case is the system steady-state for $t = t_0$, another term to the cost function can be added:

$$\left\| \mathbf{Q}_{D0} - \mathbf{Q}_{D,t=t_0} \right\|_\infty,$$

where $Q_{D,t}=t_0$ are the steady-state values for $t = t_0$ of the reactive power generation of generators and compensators. With this term we achieve small setpoint changes and the accuracy of the solution is also improved.

In a strong grid, even with the additional term, it is still possible that $Q_{C0} = Q^*_C$ and $Q_{D0} = Q_{D,t=t0}$ are achieved for several droop combinations while all constraints are satisfied. This allows us to define additional optimizations goals, which are optimized only if the primary goal is achieved. Various optimization functions could be used, such as:

1. Minimize the weighted sum of droop gains

$$w_k^T \mathbf{k}_{QD},$$

since small droop gains imply small voltage variations in the grid.

2. The minimization of grid losses. The losses in a power line which connects buses i and j and with an impedance $z_{ij} = r_{ij} + j_{xij}$ is

$$P_{L,ij} = \Re\left\{ (\underline{V}_i - \underline{V}_j)\underline{I}_{ij}^* \right\} = |\underline{V}_i - \underline{V}_j|^2 \frac{r_{ij}}{(r_{ij} + x_{ij})^2}.$$

By using the same approximation as in Equation (35), the last expression can be simplified to

$$P_{L,ij} = (V_i - V_j)^2 \frac{r_{ij}}{(r_{ij} + x_{ij})^2}.$$

The total grid losses, using the matrix notation, can then be written as

$$P_L = \mathbf{\Delta V}^T \Psi \mathbf{\Delta V} = \mathbf{V}^T B \Psi B^T \mathbf{V}, \qquad (39)$$

where $\Delta V = B^T V$ is the vector of voltage differences on the power lines, and

$$\Psi = \mathrm{diag}\left( r_\alpha / (r_\alpha + x_\alpha)^2 \right),$$

for each power line $\alpha$. This is a nonlinear convex function, which could also be linearized or included as is.

Next, the optimization problem is formulated.

We can now mathematically formulate the solution to the problem. It will be formulated as a min-max problem where we minimize over the controller parameters, whereas the active power and voltage uncertainties in the grid seek to maximize the cost function, i.e. we are minimizing the worst case that can appear with the given uncertainty limits

$$\min_{\substack{\mathbf{Q}_{D0}\in\mathbb{R}^{n_D} \\ \mathbf{k}_{QD}\in\mathbb{R}^{n_D}_+ \\ \mathbf{a}\in\mathcal{N}_a}} \max_{\substack{\mathbf{\Delta P}_D\in\mathcal{P}_{1,\infty}(\overline{\mathbf{\Delta P}_D}) \\ \mathbf{\Delta P}_{L1}\in\mathcal{P}_{1,\infty}(\overline{\mathbf{\Delta P}_{L1}}) \\ \mathbf{\Delta P}_{L2}\in\mathcal{P}_{1,\infty}(\overline{\mathbf{\Delta P}_{L2}}) \\ \mathbf{\Delta V}_C\in\mathcal{P}_{1,\infty}(\overline{\mathbf{\Delta V}_C})}} \|\mathbf{Q}_{C0} - \mathbf{Q}_C^*\|_\infty + w_Q \|\mathbf{Q}_{D0} - \mathbf{Q}_{D,t=t_0}\|_\infty$$
$$+ w_k^T \mathbf{k}_{QD} + w_L \mathbf{V}_0^T B \Psi B^T \mathbf{V}_0$$

$$s.t \quad \|\mathbf{V} - V_N \mathbf{1}\|_\infty \leq \Delta V \tag{40a}$$

$$|B'\mathbf{V}| \leq \mathbf{\Delta V}_{PL} \tag{40b}$$

$$|\mathbf{Q}_C - \mathbf{Q}_C^*| \leq \mathbf{\Delta Q}_{C,max} \tag{40c}$$

$$\mathbf{S}_{G,min}^2 \leq \mathbf{P}_G^2 + \mathbf{Q}_G^2 \leq \mathbf{S}_{G,max}^2 \tag{40d}$$

$$\mathbf{Q}_{B,min} \leq \mathbf{Q}_B \leq \mathbf{Q}_{B,max} \tag{40e}$$

$$\mathbf{Q}_C = R_C \mathbf{V}_D + S_C \mathrm{diag}(\mathbf{a})\mathbf{V}_C + T_C(\mathbf{P}_D + \mathbf{P}_{L1}) + W_C \mathbf{P}_{L2} + \mathbf{c}_C' \tag{40f}$$

$$(\mathbb{I} + R_D \mathrm{diag}(\mathbf{k}_{QD}))\mathbf{\Delta Q}_D$$
$$= S_D \mathrm{diag}(\mathbf{a})\mathbf{\Delta V}_C + T_D(\mathbf{\Delta P}_D + \mathbf{\Delta P}_{L1}) + W_D \mathbf{\Delta P}_{L2} \tag{40g}$$

$$\mathbf{V}_D = \mathbf{V}_{D0} - \mathrm{diag}(\mathbf{k}_{QD})\mathbf{\Delta Q}_D \tag{40h}$$

$$\mathbf{V}_L = D_{LL}^{-1}\left(\mathbf{Q}_L - \mathbf{c}_{Q,L} - D_{LC}\mathrm{diag}(\mathbf{a})\mathbf{V}_C - D_{LD}\mathbf{V}_D - E_L(\widetilde{\mathbf{P}} - \widetilde{\mathbf{c}}_P)\right) \tag{40i}$$

$$\mathbf{V}_{D0} = R_D^{-1}\left(\mathbf{Q}_{D0} - S_D\mathrm{diag}(\mathbf{a})\mathbf{V}_{C0} - T_D(\mathbf{P}_{D0} + \mathbf{P}_{L10}) - W_D\mathbf{P}_{L20} - \mathbf{c}_D'\right) \tag{40j}$$

$$\mathbf{V}_{L0} = D_{LL}^{-1}\left(\mathbf{Q}_{L0} - \mathbf{c}_{Q,L} - D_{LC}\mathrm{diag}(\mathbf{a})\mathbf{V}_{C0} - D_{LD}\mathbf{V}_{D0} - E_L(\widetilde{\mathbf{P}}_0 - \widetilde{\mathbf{c}}_P)\right) \tag{40k}$$

$$\mathbf{V}_0 = \begin{pmatrix} \mathbf{V}_{D0} \\ \mathbf{V}_{L0} \end{pmatrix}, \tag{40l}$$

where $w_Q$ and $w_k$ are corresponding weighting factors, and $N_a$ is the set of allowed turn rations for the transformers with on-load tap changers. The resulting min-max optimization problem is linear in the uncertain $\Delta P_D$, $\Delta P_{L1}$, $\Delta P_{L2}$, $\Delta V_C$ and

the uncertainty sets

$$\mathcal{P}_{1,\infty}(\overline{\mathbf{\Delta P}_D}),\ \mathcal{P}_{1,\infty}(\overline{\mathbf{\Delta P}_{L1}}),\ \mathcal{P}_{1,\infty}(\overline{\mathbf{\Delta P}_{L2}})$$

and

$$\mathcal{P}_{1,\infty}(\overline{\mathbf{\Delta V}_C})$$

as defined before are convex polytopes. Hence, standard robust optimization techniques, e.g. from Boyd et al., can be used to replace the maximization over the whole sets

$$\mathcal{P}_{1,\infty}(\overline{\mathbf{\Delta P}})$$

by testing all corner points

$$\overline{\mathcal{P}_{1,\infty}(\overline{\mathbf{\Delta P}})}.$$

Thus, we can define the following problem:

$$\min_{\substack{\mathbf{Q}_{D0}\in\mathbb{R}^{n_D}\\ \mathbf{k}_{QD}\in\mathbb{R}_+^{n_D}\\ \mathbf{a}\in\mathcal{N}_a}} \|\mathbf{Q}_{C0}-\mathbf{Q}_C^*\|_\infty + w_Q\|\mathbf{Q}_{D0}-\mathbf{Q}_{D,t=t_0}\|_\infty$$
$$+w_k^T\mathbf{k}_{QD}+w_L\mathbf{V}_0^T B\Psi B^T\mathbf{V}_0$$

$$s.t \quad \|\mathbf{V}-V_N\mathbf{1}\|_\infty \leq \mathbf{\Delta V} \tag{41a}$$

$$|B'\mathbf{V}| \leq \mathbf{\Delta V}_{PL} \tag{41b}$$

$$|\mathbf{Q}_C-\mathbf{Q}_C^*| \leq \mathbf{\Delta Q}_{C,max} \tag{41c}$$

$$\mathbf{S}_{G,min}^2 \leq \mathbf{P}_G^2 + \mathbf{Q}_G^2 \leq \mathbf{S}_{G,max}^2 \tag{41d}$$

$$\mathbf{Q}_{B,min} \leq \mathbf{Q}_B \leq \mathbf{Q}_{B,max} \tag{41e}$$

$$\mathbf{Q}_C = R_C\mathbf{V}_D + S_C\mathrm{diag}(\mathbf{a})\mathbf{V}_C + T_C(\mathbf{P}_D+\mathbf{P}_{L1}) + W_C\mathbf{P}_{L2} + \mathbf{c}_C' \tag{41f}$$

$$(\mathbb{I}+R_D\mathrm{diag}(\mathbf{k}_{QD}))\mathbf{\Delta Q}_D$$
$$= S_D\mathrm{diag}(\mathbf{a})\mathbf{\Delta V}_C + T_D(\mathbf{\Delta P}_D+\mathbf{\Delta P}_{L1}) + W_D\mathbf{\Delta P}_{L2} \tag{41g}$$

$$\mathbf{V}_D = \mathbf{V}_{D0} - \mathrm{diag}(\mathbf{k}_{QD})\mathbf{\Delta Q}_D \tag{41h}$$

$$\mathbf{V}_L = D_{LL}^{-1}\left(\mathbf{Q}_L - \mathbf{c}_{Q,L} - D_{LC}\mathrm{diag}(\mathbf{a})\mathbf{V}_C - D_{LD}\mathbf{V}_D - E_L(\tilde{\mathbf{P}} - \tilde{\mathbf{c}}_P)\right)$$

$$\text{(41i)}$$

$$\mathbf{V}_{D0} = R_D^{-1}\left(\mathbf{Q}_{D0} - S_D\mathrm{diag}(\mathbf{a})\mathbf{V}_{C0} - T_D(\mathbf{P}_{D0} + \mathbf{P}_{L10}) - W_D\mathbf{P}_{L20} - \mathbf{c}_D'\right)$$

$$\text{(41j)}$$

$$\mathbf{V}_{L0} = D_{LL}^{-1}\left(\mathbf{Q}_{L0} - \mathbf{c}_{Q,L} - D_{LC}\mathrm{diag}(\mathbf{a})\mathbf{V}_{C0} - D_{LD}\mathbf{V}_{D0} - E_L(\tilde{\mathbf{P}}_0 - \tilde{\mathbf{c}}_P)\right)$$

$$\text{(41k)}$$

$$\mathbf{V}_0 = \begin{pmatrix} \mathbf{V}_{D0} \\ \mathbf{V}_{L0} \end{pmatrix}$$

$$\text{(41l)}$$

$$\forall \boldsymbol{\Delta}\mathbf{P}_D \in \overline{\mathcal{P}_{1,\infty}(\boldsymbol{\Delta}\mathbf{P}_D)}$$

$$\text{(41m)}$$

$$\forall \boldsymbol{\Delta}\mathbf{P}_{L1} \in \overline{\mathcal{P}_{1,\infty}(\boldsymbol{\Delta}\mathbf{P}_{L1})}$$

$$\text{(41n)}$$

$$\forall \boldsymbol{\Delta}\mathbf{P}_{L2} \in \overline{\mathcal{P}_{1,\infty}(\boldsymbol{\Delta}\mathbf{P}_{L2})}$$

$$\text{(41o)}$$

$$\forall \boldsymbol{\Delta}\mathbf{V}_C \in \overline{\mathcal{P}_{1,\infty}(\boldsymbol{\Delta}\mathbf{V}_C)},$$

$$\text{(41p)}$$

where

$$\overline{\mathcal{P}_{1,\infty}}$$

denotes the set of all corner points of

$$\mathcal{P}_{1,\infty}.$$

Because of the product term $\mathrm{diag}(k_{QD})\Delta_{QD}$ in (41g) and (41h), the problem (41) is nonlinear with possibly multiple local minima. This means the problem needs to be solved with a nonlinear solver and a global optimum is not guaranteed for every initial value. However, the nonlinear program was implemented and tested on different test grids with different initial values, and all initial values led to the same optimum.

## Claims

1.  Method for reactive power and voltage control in a distribution grid, the method comprising:

    - a steady state model of the distribution grid is derived (1),
    - an optimization problem is formulated to compute optimized parameters for Q(V) droop controllers (3), the Q(V) droop controllers being adapted to control a reactive power generation in the distribution grid, and the optimized parameters comprising droop gain,
    - the optimization problem is solved by means of a processor so that cost function terms are minimized, the terms comprising:

        a deviation of reactive power supply from the distribution grid to a transmission grid from a predetermined reference value,
**characterized in that**
the optimization problem is formulated subject to constraints, the constraints comprising Voltage limits in the distribution grid.

2. Method according to claim 1, wherein the parameters comprise voltage set-points and/or reactive power set-points (3) .

3. Method according to claim 1 or 2, wherein the optimization problem is formulated as a robust optimization problem (3) wherein the optimization problem is formulated as a robust optimization problem allowing for uncertain parameters.

4. Method according to one of the preceding claims, wherein the steady state model takes into account both a power flow behavior of the distribution grid and a steady state behavior of local Q(V) droop controllers (3).

5. Method according to one of the preceding claims, wherein the steady state model is in part linearized before the optimization problem is formulated (2).

6. Method according to one of the preceding claims, wherein the optimized parameters are applied to control renewable energy generators by means of the Q(V) droop controllers in the distribution grid, such that reactive power is supplied from the distribution grid to the transmission grid according to the predetermined reference value (6).

7. Method according to one of the preceding claims, wherein the cost function terms comprise power losses in the distribution grid (3).

8. Method according to one of the preceding claims, wherein the optimization problem is formulated under uncertainties, the uncertainties containing unknown but bounded active power infeed and load (4).

9. Method according to claim 8, wherein the uncertainties contain unknown but bounded voltages at the connection points of the distribution grid to the transmission grid (5).

10. Method according to one of the preceding claims, wherein the constraints further comprise at least one of the following constraints:

   - Power line capacities,
   - Hard limits for the deviation of reactive power supply to the transmission grid from its reference value,
   - Apparent power limits of the individual generators,
   - Reactive power limits of reactive power compensators in the distribution grid.

11. Control apparatus (7) for reactive power and voltage control in a distribution grid, the control apparatus (7) being configured to perform a method according to one of the preceding claims.

12. Control apparatus (7) according to claim 11, wherein the control apparatus contains:

   a steady state derivation device (8) configured to derive a steady state model of the distribution grid, and
   an optimization device (9) configured to solve the optimization problem.

13. System (10) for reactive power and voltage control in a distribution grid (14), the system comprising of the control apparatus (7) of claim 11 or 12, and renewable energy generators (11,12) connected to the distribution grid (16) and controlled by Q(V) droop controllers, and voltage measurement devices (16) distributed in the distribution grid (14), which are configured to communicate voltage measurements to the control apparatus (7), and a transmission grid connected to the distribution grid.

14. Computer program product for reactive power and voltage control in a distribution grid, the computer program product being adapted to perform a method according to one of the claims 1 to 10.

15. Computer program product according to claim 14, the computer program product being implemented as a cloud-based service.

**Patentansprüche**

1. Verfahren zur Blindleistungs- und Spannungssteuerung in einem Verteilnetz, wobei das Verfahren umfasst:

    - ein stationäres Modell des Verteilnetzes wird abgeleitet (1),
    - ein Optimierungsproblem wird formuliert, um optimierte Parameter für Q(V)-Statikregler zu berechnen (3), wobei die Q(V)-Statikregler dafür ausgelegt sind, eine Blindleistungserzeugung im Verteilnetz zu regeln und die optimierten Parameter eine Regeldifferenzverstärkung umfassen,
    - das Optimierungsproblem wird mittels eines Prozessors gelöst, so dass Kostenfunktionsterme minimiert werden, wobei die Terme umfassen:

       eine Abweichung der Blindleistungsversorgung vom Verteilnetz zu einem Übertragungsnetz von einem vorab festgelegten Referenzwert,
       **dadurch gekennzeichnet, dass**
       das Optimierungsproblem unter Einschränkungen formuliert wird, wobei die Einschränkungen Spannungsgrenzen im Verteilnetz umfassen.

2. Verfahren gemäß Anspruch 1, wobei die Parameter Spannungssollwerte und/oder Blindleistungssollwerte umfassen (3) .

3. Verfahren gemäß einem der Ansprüche 1 oder 2, wobei das Optimierungsproblem als ein robustes Optimierungsproblem formuliert wird (3), das unsichere Parameter erlaubt.

4. Verfahren gemäß einem der vorstehenden Ansprüche, wobei das stationäre Modell sowohl ein Leistungsflussverhalten des Verteilnetzes als auch ein Verhalten von lokalen Q(V)-Statikreglern im stationären Zustand berücksichtigt (3).

5. Verfahren gemäß einem der vorstehenden Ansprüche, wobei das stationäre Modell teilweise linearisiert wird, bevor das Optimierungsproblem formuliert wird (2).

6. Verfahren gemäß einem der vorstehenden Ansprüche, wobei die optimierten Parameter angewendet werden, um Generatoren für erneuerbare Energie mittels der Q(V)-Statikregler im Verteilnetz zu regeln, so dass Blindleistung vom Verteilnetz zum Übertragungsnetz gemäß dem vordefiniertem Referenzwert geliefert wird (6).

7. Verfahren gemäß einem der vorstehenden Ansprüche, wobei die Kostenfunktionsterme Leistungsverluste im Verteilnetz umfassen (3).

8. Verfahren gemäß einem der vorstehenden Ansprüche, wobei das Optimierungsproblem unter Unsicherheiten formuliert wird, wobei die Unsicherheiten unbekannte, aber begrenzte Wirkleistungszufuhr und -last enthalten (4).

9. Verfahren gemäß Anspruch 8, wobei die Unsicherheiten unbekannte, aber begrenzte Spannungen an den Anschlusspunkten des Verteilnetzes an das Übertragungsnetz enthalten (5).

10. Verfahren gemäß einem der vorstehenden Ansprüche, wobei die Einschränkungen ferner wenigstens eine der folgenden Einschränkungen umfassen:

    - Stromleitungskapazitäten,
    - feste Grenzen für die Abweichung der Blindleistungszufuhr zum Übertragungsnetz von ihrem Referenzwert,
    - Scheinleistungsgrenzen der einzelnen Generatoren,
    - Blindleistungsgrenzen von Blindleistungskompensatoren im Verteilnetz.

11. Regelungsvorrichtung (7) zur Blindleistungs- und Spannungssteuerung in einem Verteilnetz, wobei die Regelungsvorrichtung (7) dafür ausgelegt ist, ein Verfahren gemäß einem der vorstehenden Ansprüche auszuführen.

12. Regelungsvorrichtung (7) gemäß Anspruch 11, wobei die Regelungsvorrichtung enthält:

    eine Vorrichtung zum Ableiten des stationären Zustands (8), die dafür ausgelegt ist, ein stationäres Modell des Verteilnetzes abzuleiten, und

## EP 3 261 209 B1

eine Optimierungsvorrichtung (9), die dafür ausgelegt ist, das Optimierungsproblem zu lösen.

13. System (10) zur Blindleistungs- und Spannungssteuerung in einem Verteilnetz (14), wobei das System umfasst: die Steuerungsvorrichtung (7) nach Anspruch 11 oder 12 und Generatoren für erneuerbare Energie (11, 12), die an das Verteilnetz (16) angeschlossen sind und durch Q(V)-Statikregler geregelt werden, und im Verteilnetz (14) verteilte Spannungsmessvorrichtungen (16), die dafür ausgelegt sind, Spannungsmessungen an die Steuerungsvorrichtung (7) zu übertragen, und ein Übertragungsnetz, das an das Verteilnetz angeschlossen ist.

14. Computerprogrammprodukt zur Blindleistungs- und Spannungssteuerung in einem Verteilnetz, wobei das Computerprogrammprodukt dafür ausgelegt ist, ein Verfahren gemäß einem der Ansprüche 1 bis 10 auszuführen.

15. Computerprogrammprodukt gemäß Anspruch 14, wobei das Computerprogrammprodukt als cloud-basierter Dienst implementiert ist.

**Revendications**

1. Procédé de commande de la puissance réactive et de la tension dans un réseau de distribution, le procédé comprenant :

   - on déduit (1) un modèle d'état permanent du réseau de distribution,
   - on formule un problème d'optimisation pour calculer des paramètres optimisés pour des unités (3) de commande de statisme Q(V),
   les unités de commande de statisme Q(V) étant conçues pour commander une production de puissance réactive dans le réseau de distribution et
   les paramètres optimisés comprenant un gain de statisme,
   - on résout le problème d'optimisation au moyen d'un processeur, de manière à minimiser des termes de fonction de coût, les termes comprenant :

      un écart à une valeur de référence déterminée à l'avance d'une alimentation en puissance réactive du réseau de distribution à un réseau de transmission,
      **caractérisé en ce que**
      l'on formule le problème d'optimisation en le soumettant à des contraintes, les contraintes comprenant des limites de tension dans le réseau de distribution.

2. Procédé suivant la revendication 1, dans lequel les paramètres comprennent des points de consigne de la tension et/ou des points de consigne (3) de la puissance réactive.

3. Procédé suivant la revendication 1 ou 2, dans lequel on formule le problème d'optimisation sous la forme d'un problème (3) d'optimisation robuste, le problème d'optimisation étant formulé sous la forme d'un problème d'optimisation robuste autorisant des paramètres incertains.

4. Procédé suivant l'une des revendications précédentes, dans lequel
   le modèle d'état stationnaire prend en compte à la fois un comportement de flux de puissance du réseau de distribution et un comportement d'état stationnaire de l'unité (3) locale de commande de statisme Q(V).

5. Procédé suivant l'une des revendications précédentes, dans lequel
   on linéarise (2) en partie le modèle d'état stationnaire avant de formuler le problème d'optimisation.

6. Procédé suivant l'une des revendications précédentes, dans lequel
   on applique les paramètres optimisés pour commander des générateurs d'énergie renouvelable au moyen des unités de commande de statisme Q(V) dans le réseau de distribution, de manière à envoyer la puissance réactive du réseau de distribution au réseau de transmission suivant la valeur de référence déterminée à l'avance (6).

7. Procédé suivant l'une des revendications précédentes, dans lequel
   les termes de la fonction de coût comprennent des pertes de puissance dans le réseau (3) de distribution.

8. Procédé suivant l'une des revendications précédentes, dans lequel

on formule le problème d'optimisation avec des incertitudes, les incertitudes contenant des entrées de puissance actives et une charge inconnue mais bornée (4).

9.  Procédé suivant la revendication 8, dans lequel les incertitudes contiennent des tensions inconnues et bornées aux points de connexion du réseau de distribution au réseau de transmission (5).

10. Procédé suivant l'une des revendications précédentes, dans lequel
    les contraintes comprennent, en outre, au moins l'une des contraintes suivantes :

    - capacités de ligne de puissance,
    - limites dures de l'écart à sa valeur de référence d'une alimentation en puissance réactive du réseau de transmission,
    - limites de puissance apparente des générateurs individuels,
    - limites de puissance réactive de compensateurs de puissance réactive dans le réseau de distribution.

11. Système (7) de commande pour une commande de la puissance réactive et de la tension dans un réseau de distribution, le système (7) de commande étant configuré pour effectuer un procédé suivant l'une des revendications précédentes.

12. Système (7) de commande suivant la revendication 11, dans lequel
    le système de commande comprend :

    un dispositif (8) de déduction d'un état stationnaire configuré pour déduire un modèle d'état stationnaire du réseau de distribution et
    un dispositif (9) d'optimisation configuré pour résoudre le problème d'optimisation.

13. Système (10) de commande de la puissance réactive et de la tension dans un réseau (14) de distribution, le système comprenant le système (7) de commande de la revendication 11 ou 12 et des générateurs (11, 12) à énergie renouvelable connectés au réseau (16) de distribution et commandés par des unités de commande de statisme Q(V) et des dispositifs (16) de mesure de la tension répartis dans le réseau (14) de distribution, qui sont configurés pour communiquer des mesures de tension au système (7) de commande, et un réseau de transmission connecté au réseau de distribution.

14. Produit de programme informatique pour une commande de la puissance réactive et de la tension dans un réseau de distribution, le produit de programme informatique étant propre à effectuer un procédé suivant l'une des revendications 1 à 10.

15. Produit de programme informatique suivant la revendication 14, le produit de programme informatique étant mis en oeuvre sous la forme d'un service reposant sur le cloud.

# FIG 1

# FIG 2

FIG 3

FIG 4

FIG 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3002846 A1

### Non-patent literature cited in the description

- *BDEW: Generating Plants Connected to the Medium-Voltage Network,* 2008, 27-28
- **CHISTAYKOV et al.** Combined Central and Local Control of Reactive Power in Electrical Grids with Distributed Generation. *Proc. IEEE Intern. Energy Conference and Exhibition (ENERGYCON),* 2012
- **S. BOYD ; L. VANDEN-BERGHE.** Convex Optimization. Cambridge University Press, 2004
- Robust Control for Power Sharing in Microgrids With Low-Inertia Wind and PV Generators. **HOSSAIN M J et al.** IEEE TRANSACTIONS ON SUSTAINABLE ENERGY. IEEE, 01 July 2015, vol. 6, 1067-1077
- Control Methods of Inverter-Interfaced Distributed Generators in a Microgrid System. **IL-YOP CHUNG et al.** IEEE TRANSACTIONS ON INOUSTRY APPLICATIONS. IEEE SERVICE CENTER, 01 May 2010, vol. IA-19, 1078-1088